# EUROPEAN PATENT SPECIFICATION

(11) **EP 3 342 604 B1**
(45) Date of publication and mention of the grant of the patent: **13.03.2019**
(21) Application number: 17206354.7
(22) Date of filing: 11.12.2017
(51) Int. Cl.: B60C 1/00, C08L 7/00

(54) **PNEUMATIC TIRE**
LUFTREIFEN
PNEUMATIQUE

(30) Priority: 21.12.2016 JP 2016247780
(43) Date of publication of application: 04.07.2018
(73) Proprietor: Sumitomo Rubber Industries, Ltd., Kobe-shi, Hyogo 651-0072 (JP)
(72) Inventor: NAKAJIMA, Hiroki, Kobe-shi,, Hyogo 651-0072, (JP)
(74) Representative: TBK

(56) References cited:
- JP-A- 2010 111 772
- JP-A- 2010 111 776
- JP-A- 2016 044 270

## Description

### BACKGROUND OF THE INVENTION

### Field of the Invention

The present invention relates to a pneumatic tire having a base tread composed of a predetermined base tread rubber composition.

### Description of the Background Art

In recent years, there has been an increasing demand for tires having further improved low fuel consumption performance. To meet the demand, not only the cap tread, which occupies a larger area of the tire, but also the base tread, are required to have further excellent low fuel consumption performance.

The base tread does not make direct contact with the road surface, and therefore, the low fuel consumption performance of the base tread can be more easily improved than that of the cap tread. The base tread is a member that is interposed between the cap tread and the band, and therefore, generally contains a higher proportion of isoprene-based rubber from the viewpoint of adhesiveness and durability. However, when the isoprene-based rubber is contained in a higher proportion, a large amount of sulfur and a high vulcanization temperature may lead to reversion, which may impair the low fuel consumption performance. Therefore, high-temperature and short-time vulcanization is not suitable for production of tires for which importance is placed on low fuel consumption performance, and thus the production efficiency tends to decrease.

The reversion is also accompanied by a decrease in the break strength of the rubber composition. Therefore, it is necessary to use carbon black, which can provide a high level of reinforcement, as a reinforcing material. However, carbon black, which is typically in the form of fine particles, is known to decrease the low fuel consumption performance. Therefore, there is a trade-off between reinforcement and low fuel consumption performance if carbon black is used.

Japanese Laid-Open Patent Publication Nos. 2016-44270, 2012-111962, 2011-105789, 2010-111773, 2010-111287, 2010-111754, and 2010-90282 each disclose a tread rubber composition that contains a rubber component including an isoprene-based rubber and a butadiene-based rubber, carbon black, a mixture of a zinc salt of an aliphatic carboxylic acid and a zinc salt of an aromatic carboxylic acid, and zinc oxide. However, there is room for improvement in the low fuel consumption performance.

### SUMMARY OF THE INVENTION

It is an object of the present invention to provide a pneumatic tire having a base tread composed of a base tread rubber composition having excellent low fuel consumption performance.

The present invention is directed to a pneumatic tire characterized by having a base tread including a base tread rubber composition containing: 100 parts by mass of a rubber component including 60 to 100% by mass of an isoprene-based rubber and 0 to 40% by mass of a butadiene rubber; 30 to 50 parts by mass of a carbon black having a dibutyl phthalate absorption amount of 70 to 120 ml/100 g and a nitrogen adsorption specific surface area of 35 to 60 m²/g; 2 to 5 parts by mass of a mixture of a zinc salt of an aliphatic carboxylic acid and a zinc salt of an aromatic carboxylic acid; and 1.0 to 5 parts by mass of zinc oxide.

The pneumatic tire according to the present invention, which has a base tread composed of a base tread rubber composition that contains a rubber component including predetermined amounts of an isoprene-based rubber and a butadiene rubber, and predetermined amounts of a large-particle-size carbon black, a mixture of an aliphatic carboxylic acid zinc salt and an aromatic carboxylic acid zinc salt, and zinc oxide, has excellent low fuel consumption performance.

### DESCRIPTION OF THE PREFERRED EMBODIMENTS

A pneumatic tire according to the present invention is characterized by having a base tread composed of a base tread rubber composition containing: 100 parts by mass of a rubber component including 60 to 100% by mass of an isoprene-based rubber and 0 to 40% by mass of a butadiene rubber; 30 to 50 parts by mass of a carbon black having a dibutyl phthalate absorption amount of 70 to 120 ml/100 g and a nitrogen adsorption specific surface area of 35 to 60 m²/g; 2 to 5 parts by mass of a mixture of a zinc salt of an aliphatic carboxylic acid and a zinc salt of an aromatic carboxylic acid; and 1.0 to 5 parts by mass of zinc oxide.

The mixture of a zinc salt of an aliphatic carboxylic acid and a zinc salt of an aromatic carboxylic acid blended with the isoprene-based rubber, the molecular chain of which is easily cleaved during vulcanization, can inhibit the cleavage of the molecular chain, whereby reversion can be inhibited. In addition, it is considered that the carbon black is entangled with the rubber molecular chain, the length of which is maintained long, and therefore, heat generation is synergistically inhibited.

The rubber component includes 60 to 100% by mass of an isoprene-based rubber and 0 to 40% by mass of a butadiene rubber.

Examples of the isoprene-based rubber include natural rubbers (NR), modified natural rubbers, and isoprene rubbers (IR). Examples of the NR include high-purity natural rubber (HPNR). Examples of the modified natural rubbers include epoxidized natural rubber (ENR), hydrogenated natural rubber (HNR) and grafted natural rubber. As the NR, for example, NR commonly used in the tire industry, such as SIR20, RSS#3, and TSR20, or HPNR, can be used.

The content of the isoprene-based rubber in the rubber component is not less than 60% by mass, more preferably not less than 65% by mass, and even more preferably not less than 68% by mass. When the content is less than 60% by mass, the adhesiveness and durability may be insufficient. The content of the isoprene-based rubber is also preferably 100% by mass from the viewpoint of adhesiveness and durability. Note that when two or more isoprene-based rubbers are used in combination, the total amount of the isoprene-based rubbers is referred to as the isoprene-based rubber content.

The butadiene rubber (BR) is not particularly limited. Examples of the butadiene rubber include: high-cis-content BRs, such as BR 1220, manufactured by Zeon Corporation, and BR 130B and BR 150B, manufactured by Ube Industries, Ltd.; modified BRs, such as BR1250H, manufactured by Zeon Corporation; syndiotactic polybutadiene crystal-containing BRs, such as VCR412 and VCR617, manufactured by Ube Industries, Ltd.; and BRs (rare-earth BRs) that are synthesized using a rare-earth element-based catalyst, such as BUNA CB 25, manufactured by Lanxess. These BRs may be used singly or two or more of these BRs may be used in combination. Of these BRs, high-cis-content BRs, which have more excellent low heat generation properties, are preferably used.

Examples of the modified BRs include a modified BR (tin-modified BR) that is obtained by polymerizing 1,3-butadiene using a lithium initiator and then adding a tin compound to the 1,3-butadiene polymer and in which the ends of modified BR molecules are linked by a tin-carbon bond, and a butadiene rubber (modified BR for silica) that has a condensed alkoxysilane compound at an active end thereof. Specific examples of the modified BRs include BR 1250H (tin-modified BR), manufactured by Zeon Corporation, and S-modified Polymer (modified BR for silica), manufactured by Sumitomo Chemical Co., Ltd.

The rare-earth BRs, which are synthesized using a rare-earth element-based catalyst, are characterized by having a high cis content and a low vinyl content. As the rare-earth BRs, those that are commonly used in tire production may be used.

As a rare-earth element-based catalyst used for synthesizing the rare-earth BRs, a known catalyst may be used. Examples of the rare-earth element-based catalyst include catalysts containing a lanthanoid-series rare-earth element compound, an organic aluminum compound, an aluminoxane, and a halogen-containing compound, and optionally, a Lewis base. Of these catalysts, Nd-based catalysts containing a neodymium (Nd)-containing compound as the lanthanoid-series rare-earth element compound are particularly preferable.

Examples of the lanthanoid-series rare-earth element compound include halides, carboxylates, alcoholates, thioalcoholates, amides, etc., of the rare-earth metals having an atomic number of 57 to 71. Of these lanthanoid-series rare-earth element compounds, the above Nd-based catalysts are preferable because BRs having a high cis content and a low vinyl content are obtained.

Examples of the organic aluminum compound include those represented by AlR^{a}R^{b}R^{c} (where R^{a}, R^{b}, and R^{c} are the same or different from each other and each represent hydrogen or a hydrocarbon group having 1 to 8 carbon atoms). Examples of the aluminoxane include linear aluminoxanes and cyclic aluminoxanes. Examples of the halogen-containing compound include: aluminum halides represented by AlXₖR^{d}₃₋ₖ (where X represents a halogen, R^{d} represents an alkyl group, aryl group, or aralkyl group having 1 to 20 carbon atoms, and k represents 1, 1.5, 2, or 3); strontium halides, such as Me₃SrCl, Me₂SrCl₂, MeSrHCl₂, and MeSrCl₃; and metal halides, such as silicon tetrachloride, tin tetrachloride, and titanium tetrachloride. The Lewis base, which is used for complexation of the lanthanoid-series rare-earth element compound, is preferably acetylacetone, a ketone, or an alcohol.

During polymerization of butadiene, the rare-earth element-based catalyst may be used in the form of a solution using an organic solvent (n-hexane, cyclohexane, n-heptane, toluene, xylene, benzene, etc.), or may be supported on a suitable carrier such as silica, magnesia, or magnesium chloride. The polymerization method may be either solution polymerization or bulk polymerization. The polymerization temperature is preferably -30 to 150°C. The polymerization pressure may be set as appropriate depending on other conditions.

The rare-earth BRs preferably have a cis-1,4 bond content (cis content) of not less than 90% by mass, more preferably not less than 93% by mass, and even more preferably not less than 95% by mass, from the viewpoint of durability and wear resistance.

The rare-earth BRs preferably have a vinyl content of not greater than 1.8% by mass, more preferably not greater than 1.5% by mass, even more preferably not greater than 1.0% by mass, and particularly preferably not greater than 0.8% by mass, from the viewpoint of durability and wear resistance. In the present specification, the vinyl content (1,2-bond butadiene unit amount) and the cis content (cis-1,4 bond content) of the BR may be measured by infrared absorption spectroscopy.

The content of the BR in the rubber component is preferably not greater than 40% by mass, more preferably not greater than 35% by mass, and even more preferably not greater than 32% by mass. When the BR content exceeds 40% by mass, the adhesiveness and the durability may be insufficient. The BR content is preferably 0% by mass from the viewpoint of low fuel consumption performance. Note that when two or more BRs are used in combination, the total amount of the BRs is referred to as the BR content.

The rubber component may contain rubber (other rubber) other than the isoprene-based rubber and the BR, in addition to the isoprene-based rubber and the BR. Examples of the other rubber include diene rubbers and butyl rubbers, such as styrene-butadiene rubber (SBR), styrene-isoprene-butadiene copolymer rubber, chloroprene rubber (CR), and acrylonitrile-butadiene copolymer rubber (NBR). These rubbers may be used singly or two or more of these rubbers may be used in combination. However, a rubber component including only isoprene-based rubber and BR is preferable from the viewpoint of low fuel consumption performance, adhesiveness, and durability.

The carbon black is a large-particle-size carbon black that has a dibutyl phthalate absorption amount of 70 to 120 ml/100 g and a nitrogen adsorption specific surface area of 35 to 60 m²/g. When the large-particle-size carbon black is contained, the reinforcing performance and the low fuel consumption performance can be improved in a balanced manner. Examples of the large-particle-size carbon black include, but are not limited to, if the above conditions are satisfied, FEF and GPF.

The large-particle-size carbon black has a dibutyl phthalate (DBP) absorption amount of not less than 70 ml/100 g, preferably not less than 105 ml/100 g, and more preferably not less than 110 ml/100 g. When the DBP absorption amount is less than 70 ml/100 g, sufficient reinforcing performance may not be achieved and thus the durability may deteriorate. The DBP absorption amount is also not greater than 120 ml/100 g, preferably not greater than 118 ml/100 g, and more preferably not greater than 115 ml/100 g. When the DBP absorption amount exceeds 120 ml/100 g, the elongation of the rubber composition may decrease and thus the durability may deteriorate.

The large-particle-size carbon black has a nitrogen adsorption specific surface area (N₂SA) of not less than 35 m²/g, preferably not less than 38 m²/g. When the N₂SA is smaller than 35 m²/g, sufficient reinforcing performance may not be achieved, and the durability may deteriorate. The N₂SA is also not greater than 60 m²/g, preferably not greater than 55 m²/g, and more preferably not greater than 50 m²/g. When the N₂SA exceeds 60 m²/g, sufficient low fuel consumption performance may not be achieved.

The amount of the large-particle-size carbon black with respect to 100 parts by mass of the rubber component is not less than 30 parts by mass and more preferably not less than 35 parts by mass. When the amount of the large-particle-size carbon black is less than 30 parts by mass, sufficient reinforcing performance may not be achieved and thus the durability may deteriorate. The amount of the carbon black is also not greater than 50 parts by mass and more preferably not greater than 45 parts by mass. When the amount of the carbon black exceeds 50 parts by mass, sufficient low fuel consumption performance may not be achieved.

The mixture is a mixture of a zinc salt of an aliphatic carboxylic acid and a zinc salt of an aromatic carboxylic acid. When the mixture is contained, reversion can be inhibited.

Examples of the aliphatic carboxylic acid of the aliphatic carboxylic acid zinc salt include: aliphatic carboxylic acids derived from plant oils, such as coconut oil, palm kernel oil, camellia oil, olive oil, almond oil, canola oil, peanut oil, rice bran oil, cacao butter, palm oil, soybean oil, cottonseed oil, sesame oil, linseed oil, castor oil, and rapeseed oil; aliphatic carboxylic acids derived from animal oils, such as tallow; and aliphatic carboxylic acids derived from petroleum oils, such as aroma oils. Aliphatic carboxylic acids derived from plant oils are preferable, and aliphatic carboxylic acids derived from coconut oil, palm kernel oil, or palm oil are more preferable, because they cause less environmental damage, and may be available as alternatives when the supply amount of petroleum is reduced in the future, and can sufficiently inhibit reversion.

The number of carbon atoms of the aliphatic carboxylic acid is preferably not less than four and more preferably not less than six. When the number of carbon atoms of the aliphatic carboxylic acid is less than four, the dispersibility tends to deteriorate. The number of carbon atoms of the aliphatic carboxylic acid is also preferably not greater than 16, more preferably not greater than 14, and even more preferably not greater than 12. When the number of carbon atoms of the aliphatic carboxylic acid exceeds 16, reversion tends not to be sufficiently inhibited.

Note that the aliphatic structure of the aliphatic carboxylic acid may be either a linear structure such as an alkyl group or a cyclic structure such as a cycloalkyl group.

Examples of the aromatic carboxylic acid in the aromatic carboxylic acid zinc salt include benzoic acid, phthalic acid, mellitic acid, hemimellitic acid, trimellitic acid, diphenic acid, and toluic acid, naphthoic acid. Of these aromatic carboxylic acids, benzoic acid, phthalic acid, or naphthoic acid is preferable because they can sufficiently inhibit reversion.

The molar ratio of the aliphatic carboxylic acid zinc salt and the aromatic carboxylic acid zinc salt contained in the mixture (the aliphatic carboxylic acid zinc salt/the aromatic carboxylic acid zinc salt, hereinafter referred to as the content ratio) is preferably not less than 1/20, more preferably not less than 1/15, and even more preferably not less than 1/10. When the content ratio is less than 1/20, the dispersibility and the stability of the mixture tend to deteriorate. The content ratio is also preferably not greater than 20/1, more preferably not greater than 15/1, and even more preferably not greater than 10/1. When the content ratio exceeds 20/1, reversion tends not to be sufficiently inhibited.

The zinc content of the mixture is preferably not less than 3% by mass and more preferably not less than 5% by mass. When the zinc content of the mixture is less than 3% by mass, reversion tends not to be sufficiently inhibited. The zinc content of the mixture is also preferably not greater than 30% by mass and more preferably not greater than 25% by mass. When the zinc content of the mixture exceeds 30% by mass, the processability tends to deteriorate.

The amount of the mixture with respect to 100 parts by mass of the rubber component is not less than 2 parts by mass, preferably not less than 3 parts by mass, and more preferably not less than 4 parts by mass. When the amount of the mixture is less than 2 parts by mass, the reversion inhibitory effect tends to be insufficient, and the low fuel consumption performance improving effect tends to be difficult to achieve. The amount of the mixture is also not greater than 5 parts by mass and preferably not greater than 4 parts by mass. When the amount of the mixture exceeds 5 parts by mass, the viscosity of the rubber may significantly decrease, the processability may deteriorate, and thus bloom may occur.

The inclusion of zinc oxide can improve the adhesiveness.

The amount of zinc oxide with respect to 100 parts by mass of the rubber component is not less than 1.0 part by mass and more preferably 1.5 parts by mass. When the amount of zinc oxide is less than 1.0 part by mass, sufficient adhesiveness may not be achieved. The amount of zinc oxide is also not greater than 5 parts by mass and preferably not greater than 4 parts by mass. Even when the amount of zinc oxide exceeds 5 parts by mass, the amount is excessive, and the adhesiveness cannot be expected to be further improved.

The base tread rubber composition may optionally contain, in addition to the above components, compounding ingredients commonly used in production of rubber compositions, such as reinforcing agents (other reinforcing agents) other than the large-particle-size carbon black, coupling agents, stearic acid, plasticizers, antioxidants, waxes, vulcanizing agents, and vulcanization accelerators.

The other reinforcing agents are not particularly limited. Examples of the other reinforcing agents include white fillers, such as silica, and carbon blacks other than the large-particle-size carbon black.

Examples of silica includes include one that is prepared by a dry method (silicic anhydride), and one that is prepared by a wet method (hydrous silicic acid). Of these types of silica, preferable is silica that is prepared by a wet method because it has many silanol groups on the surface, and therefore, there are many points where the silica reacts with a silane coupling agent.

When silica is contained, the amount of the silica with respect to 100 parts by mass of the rubber component is preferably not less than 0.5 parts by mass, more preferably not less than 1.0 part by mass, and even more preferably not less than 2.0 parts by mass, from the viewpoint of low fuel consumption performance and reinforcing performance. The amount of the silica is also preferable not greater than 140 parts by mass and more preferably not greater than 120 parts by mass, from the viewpoint of processability.

When silica is contained, a silane coupling agent is preferably used in combination with the silica. The silane coupling agent may be any one that is commonly used in combination with silica in the rubber industry. Examples of the silane coupling agent include: sulfide silane coupling agents, such as bis(3-triethoxysilylpropyl)disulfide and bis(3-triethoxysilylpropyl)tetrasulfide; mercapto silane coupling agents (silane coupling agents having a mercapto group), such as 3-mercaptopropyltrimethoxysilane, and NXT-Z100, NXT-Z45, and NXT, manufactured by Momentive; vinyl silane coupling agents, such as vinyltriethoxysilane; amino silane coupling agents, such as 3-aminopropyltriethoxysilane; glycidoxy silane coupling agents, such as γ-glycidoxypropyltriethoxysilane; nitro silane coupling agents, such as 3-nitropropyltrimethoxysilane; and chloro silane coupling agents, such as 3-chloropropyltrimethoxysilane. These silane coupling agents may be used singly or two or more of these silane coupling agents may be used in combination.

When a silane coupling agent is contained, the amount of the silane coupling agent with respect to 100 parts by mass of the silica is preferably not less than 0.5 parts by mass, more preferably not less than 1.5 parts by mass, and even more preferably not less than 2.5 parts by mass, because the silica can be well dispersed. The amount of the silane coupling agent is also preferably not greater than 20 parts by mass, more preferably not greater than 15 parts by mass, and even more preferably not greater than 10 parts by mass, because a silica dispersing effect that corresponds to the increase in cost is achieved, and the scorch time does not become excessively short and therefore the processability is good in a kneading process and in an extrusion process.

Examples of the plasticizers include oils, liquid polymers, liquid resins, plant oils, and ester plasticizers. Of these plasticizers, oils are preferable from the viewpoint of the balance between processability, low fuel consumption performance, and cost. Examples of the oils include those commonly used in the tire industry, such as aroma oils, naphthene oils, and paraffin oils. Examples of the ester plasticizers include dibutyl adipate (DBA), diisobutyl adipate (DIBA), dioctyl adipate (DOA), di(2-ethylhexyl)azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), di(2-ethylhexyl)sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), and trixylenyl phosphate (TXP).

When a plasticizer is contained, the amount of the plasticizer with respect to 100 parts by mass of the rubber component is preferably not less than 3 parts by mass and more preferably not less than 4 parts by mass, because sufficient low fuel consumption performance and processability are both achieved. The amount of the plasticizer is also preferably not greater than 40 parts by mass and more preferably not greater than 35 parts by mass, because the rubber strength is inhibited from decreasing.

Examples of the vulcanizing agents include sulfur, such as powdered sulfur, precipitated sulfur, colloidal sulfur, surface-treated sulfur, and insoluble sulfur. The amount of the vulcanizing agent is not particularly limited as long as the advantageous effects of the present invention are not impaired. The amount of the vulcanizing agent may be that in a commonly used rubber composition.

Examples of the vulcanization accelerators include benzothiazoles, benzothiazolyl sulfenamides, and benzothiazolyl sulfeneimides. Of these vulcanization accelerators, benzothiazolyl sulfenamides are preferable, and N-cyclohexyl-2-benzothiazolyl sulfenamide are more preferable, because they are suitable for NRs and BRs, can accelerate vulcanization faster, and are available at relatively low cost. As the vulcanization accelerator, benzothiazolyl sulfenamide and another vulcanization accelerator may be used in combination.

When a vulcanization accelerator is contained, the amount of the vulcanization accelerator with respect to 100 parts by mass of the rubber component is preferably not less than 0.5 parts by mass and more preferably not less than 1.5 parts by mass, because a suitable vulcanization speed is obtained, and sufficient vulcanization can be achieved. The amount of the vulcanization accelerator is also preferably not greater than 4.0 parts by mass and more preferably not greater than 3.0 parts by mass, because a suitable vulcanization speed is obtained, and scorching is less likely to occur.

The base tread rubber composition according to the present invention can be produced using a commonly used method. For example, the base tread rubber composition according to the present invention may be produced by kneading the above components other than the crosslinking agent and the vulcanization accelerator together using a known kneading machine that is commonly used in the rubber industry, such as a Banbury mixer, a kneader, or an open mill, then adding the crosslinking agent and the vulcanization accelerator to the mixture, and further kneading the resultant mixture, followed by vulcanization.

The pneumatic tire according to the present invention can be produced by a commonly used method using the above rubber composition. Specifically, the pneumatic tire according to the present invention may be produced by extruding the above rubber composition containing a diene rubber component and, optionally, the above compounding ingredients, into the shape of a base tread, attaching the resulting rubber composition and other tire members together on a tire forming machine, performing molding using a commonly used method to form an unvulcanized tire, and heating and pressurizing the unvulcanized tire in a vulcanizer.

### EXAMPLES

The present invention will be specifically described by way of examples. The present invention is not intended to be limited to the examples.

Various chemicals used in examples and comparative examples are collectively described below.
NR: TSR20
BR: UBEPOL BR 150B (cis content: 97% by mass), manufactured by Ube Industries, Ltd.
Carbon black 1: DIABLACK N330 (DBP absorption amount: 102 ml/100 g, N₂SA: 79 m²/g), manufactured by Mitsubishi Chemical Corporation.
Carbon black 2: DIABLACK N220 (DBP absorption amount: 114 ml/100 g, N₂SA: 115 m²/g), manufactured by Mitsubishi Chemical Corporation.
Carbon black 3: DIABLACK N550 (FEF, DBP absorption amount: 115 ml/100 g, N₂SA: 41 m²/g), manufactured by Mitsubishi Chemical Corporation.
Wax: SUNNOC N, manufactured by Ouchi Shinko Chemical Industrial Co., Ltd.
Antioxidant 1: ANTIGENE 6C (N-phenyl-N'-(1,3-dimethyl butyl)-p-phenylenediamine), manufactured by Sumitomo Chemical Co., Ltd.
Antioxidant 2: ANTIGENE RD (2,2,4-trimethyl-1,2-dihydroquinoline polymer), manufactured by Sumitomo Chemical Co., Ltd.
Stearic acid: stearic acid "Tsubaki," manufactured by NOF Corporation.
Zinc oxide: type 1 zinc oxide manufactured by Mitsui Mining & Smelting Co., Ltd.
Mixture : Activator 73A (aliphatic carboxylic acid zinc salt: a zinc salt of a coconut oil-derived fatty acid (8 to 12 carbon atoms), aromatic carboxylic acid zinc salt: zinc benzoate, content molar ratio: 1/1, zinc content: 17% by mass), manufactured by Struktol.
Oil: X-140 (aroma oil), manufactured by Japan Energy Corporation.
Sulfur: powdered sulfur manufactured by Tsurumi Chemical Industry Co., Ltd.
Vulcanization accelerator: SOXINOL CZ (N-cyclohexyl-2-benzothiazolylsulfenamide), manufactured by Sumitomo Chemical Co., Ltd.

### Examples and Comparative Examples

The above chemicals other than the sulfur and the vulcanization accelerator were kneaded using a 1.7-L Banbury mixer at a discharge temperature of 150°C for 5 min, in accordance with blending specifications shown in Table 1, to obtain a kneaded product. Next, the sulfur and the vulcanization accelerator were added to the resultant kneaded product, followed by kneading for 3 min, using an open mill, to obtain an unvulcanized rubber composition. Furthermore, the resultant unvulcanized rubber composition was vulcanized under high-temperature vulcanization conditions, that is, press vulcanization at 180°C for 10 min, or under low-temperature vulcanization conditions, that is, press vulcanization at 170°C for 12 min. Thus, vulcanized rubber sheets for testing were prepared.

The thus-prepared vulcanized rubber sheets for testing were evaluated using methods described as follows. The results of the evaluation are shown in Table 1.

### Low Fuel Consumption Performance Test

The loss tangent (tanδ) of each vulcanized rubber composition was measured using a spectrometer manufactured by Ueshima Seisakusho Co., Ltd. under conditions where the dynamic strain amplitude was 1%, the frequency was 10 Hz, and the temperature was 50°C. The results (tanδ) are represented as indexes with the tanδ of Comparative Example 1 being 100. The higher the index is, the better the low fuel consumption performance is.

### Durability Test

A tensile test was conducted on type 3 dumb-bell test pieces made of the respective vulcanized rubber compositions for testing in an atmosphere of 80°C in accordance with JIS K 6251 "Rubber, vulcanized or thermoplastics - Determination of tensile stress-strain properties". The tensile strength at break (TB) (MPa) and the elongation at break (EB) (%) of each test piece were measured, and the rupture energy was calculated by the formula "rupture energy = (TB × EB)/2". The results are represented as indexes with the rupture energy of Comparative Example 1 being 100. The higher the index is, the better the rupture characteristics and durability are.

### Adhesiveness Test

Unvulcanized rubber sheets having a thickness of 2 mm were cut out of each of the unvulcanized rubber compositions. Two of the unvulcanized rubber sheets were put on top of each other, and were attached to each other by vulcanization under high-temperature vulcanization conditions or low-temperature vulcanization conditions. The resultant laminate was cut into a piece having a width of 25 mm, which was used as a rubber test piece for an adhesiveness test. These rubber sheets were peeled from each other at a pull speed of 50 mm/min, to measure a peel strength (N/mm). The results, that is, the peel strength of each composition, is represented as an index with the peel strength of Comparative Example 1 being 100. The higher the index is, the better the adhesiveness to an adjacent member is.

**Table 1**

| | | Examples | | | | Comparative Examples | | | | | | |
|---|---|---|---|---|---|---|---|---|---|---|---|---|
| | | 1 | 2 | 3 | 4 | 1 | 2 | 3 | 4 | 5 | 6 | 7 |
| Blending amount (parts by mass) | NR | 70 | 100 | 70 | 70 | 70 | 70 | 70 | 70 | 70 | 70 | 50 |
| | BR | 30 | - | 30 | 30 | 30 | 30 | 30 | 30 | 30 | 30 | 50 |
| | Carbon black 1 | - | - | - | - | 40 | - | - | - | 40 | - | - |
| | Carbon black 2 | - | - | - | - | - | 40 | - | - | - | 40 | - |
| | Carbon black 3 | 40 | 40 | 35 | 45 | - | - | 40 | 40 | - | - | 40 |
| | Wax | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 |
| | Antioxidant 2 | 1 | 1 | 1 | 1 | 1 | 1 | 1 | 1 | 1 | 1 | 1 |
| | Stearic acid | 2 | 2 | 2 | 2 | 2 | 2 | 2 | 2 | 2 | 2 | 2 |
| | Zinc oxide | 4 | 4 | 4 | 4 | 2 | 2 | 2 | 4 | 4 | 4 | 4 |
| | Mixture | 3 | 4 | 3 | 3 | - | - | - | - | 3 | 3 | 3 |
| | Oil | 5 | 5 | 5 | 5 | 5 | 5 | 5 | 5 | 5 | 5 | 5 |
| | Sulfur | 2 | 2 | 2 | 2 | 2 | 2 | 2 | 2 | 2 | 2 | 2 |
| | Vulcanization acceleration agent | 2 | 2 | 2 | 2 | 2 | 2 | 2 | 2 | 2 | 2 | 2 |
| Evaluation results | High-temperature vulcanization condition | | | | | | | | | | | |
| | Low fuel consumption performance | 167 | 200 | 250 | 154 | 100 | 63 | 125 | 133 | 100 | 64 | 122 |
| | Durability | 120 | 130 | 125 | 140 | 100 | 120 | 60 | 66 | 100 | 120 | 50 |
| | Adhesiveness | 120 | 130 | 120 | 140 | 100 | 120 | 60 | 70 | 100 | 121 | 40 |
| | Low-temperature vulcanization condition | | | | | | | | | | | |
| | Low fuel consumption performance | 200 | 222 | 270 | 182 | 100 | 71 | 133 | 137 | 100 | 73 | 130 |
| | Durability | 130 | 140 | 130 | 150 | 100 | 125 | 65 | 72 | 110 | 124 | 55 |
| | Adhesiveness | 135 | 135 | 130 | 145 | 100 | 125 | 65 | 73 | 105 | 129 | 42 |

The results in Table 1 demonstrate that the pneumatic tire according to the present invention, which has a base tread composed of a base tread rubber composition that contains a rubber component including predetermined amounts of an isoprene-based rubber and a butadiene rubber, and predetermined amounts of a large-particle-size carbon black, a mixture of an aliphatic carboxylic acid zinc salt and an aromatic carboxylic acid zinc salt, and zinc oxide, has excellent low fuel consumption performance.

Provided is a pneumatic tire having excellent low fuel consumption performance. The pneumatic tire has a base tread including a base tread rubber composition containing: 100 parts by mass of a rubber component containing 60 to 100% by mass of an isoprene-based rubber and 0 to 40% by mass of a butadiene rubber; 30 to 50 parts by mass of a carbon black having a dibutyl phthalate absorption amount of 70 to 120 ml/100 g and a nitrogen adsorption specific surface area of 35 to 60 m²/g; 2 to 5 parts by mass of a mixture of a zinc salt of an aliphatic carboxylic acid and a zinc salt of an aromatic carboxylic acid; and 1.0 to 5 parts by mass of zinc oxide.

## Claims

1. A pneumatic tire having a base tread composed of a base tread rubber composition containing: 100 parts by mass of a rubber component including 60 to 100% by mass of an isoprene-based rubber and 0 to 40% by mass of a butadiene rubber; 30 to 50 parts by mass of a carbon black having a dibutyl phthalate absorption amount of 70 to 120 ml/100 g and a nitrogen adsorption specific surface area of 35 to 60 m²/g; 2 to 5 parts by mass of a mixture of a zinc salt of an aliphatic carboxylic acid and a zinc salt of an aromatic carboxylic acid; and 1.0 to 5 parts by mass of zinc oxide.

## Patentansprüche

1. Luftreifen aufweisend eine Profillauffläche zusammengesetzt aus einer Profillaufflächenkautschukzusammensetzung enthaltend: 100 Masse-Teile einer Kautschukkomponente beinhaltend 60 bis 100 Masse-% eines Isopren-basierten Kautschuks und 0 bis 40 Masse-% eines Butadienkautschuks; 30 bis 50 Masse-Teile an Carbon Black mit einer Dibutyl-Phthalatabsorptionsmenge von 70 bis 120 ml/100g und einer Stickstoffadsorptions-spezifischen Oberflächenfläche von 35 bis 60 m²/g; 2 bis 5 Masse-Teile einer Mischung eines Zinksalzes einer aliphatischen Carbonsäure und eines Zinksalzes einer aromatischen Carbonsäure; und 1,0 bis 5 Masse-Teile an Zinkoxid.

## Revendications

1. Pneu ayant une bande de roulement de base composée d'une composition de caoutchouc de bande de roulement de base contenant : 100 parties en masse d'un composant caoutchouc contenant 60 à 100 % en masse d'un caoutchouc à base d'isoprène et 0 à 40 % en masse d'un caoutchouc de butadiène ; 30 à 50 parties en masse d'un noir de carbone ayant une quantité d'absorption de phtalate de dibutyle de 70 à 120 ml/100 g et une surface spécifique par adsorption d'azote de 35 à 60 m²/g ; 2 à 5 parties en masse d'un mélange d'un sel de zinc d'un acide carboxylique aliphatique et d'un sel de zinc d'un acide carboxylique aromatique ; et 1,0 à 5 parties en masse d'oxyde de zinc.
